# EUROPÄISCHE PATENTSCHRIFT

(11) **EP 2 601 396 B1**
(45) Veröffentlichungstag und Bekanntmachung des Hinweises auf die Patenterteilung: **20.04.2016**
(21) Anmeldenummer: 11740839.3
(22) Anmeldetag: 27.07.2011
(51) Int. Cl.: F02M 69/00, F02M 21/02, F02D 19/06, F02M 21/06, F02M 31/20

(54) **VERBRENNUNGSKRAFTMASCHINE MIT FLÜSSIGEN UND GASFÖRMIGEN KRAFTSTOFF**
INTERNAL COMBUSTION ENGINE WITH LIQUID AND GASEOUS FUEL
MOTEUR À COMBUSTION INTERNE À CARBURANT LIQUIDE ET GAZEUX

(30) Priorität: 07.08.2010 DE 102010034227
(43) Veröffentlichungstag der Anmeldung: 12.06.2013
(73) Patentinhaber: Daimler AG, 70327 Stuttgart (DE)
(72) Erfinder: EBNER, Albert, 71522 Backnang (DE); SCHITTENHELM, Jens, 71083 Herrenberg (DE); SCHNEIDER, Dirk, 75365 Calw-Alzenberg (DE); WOLLENHAUPT, Helge, 71334 Waibling (DE); WUNDERLICH, Klaus, 71336 Waiblingen (DE)
(74) Vertreter: JENSEN & SON
(86) Internationale Anmeldenummer: PCT/EP2011/003765
(87) Internationale Veröffentlichungsnummer: WO 2012/019707

(56) Entgegenhaltungen:
- EP-A2- 1 002 946
- WO-A1-2008/028609
- DE-A1- 19 963 229
- DE-A1-102008 024 561
- JP-A- 2003 074 415
- US-A- 2 767 691
- US-A- 4 742 801
- US-A- 5 775 282

## Beschreibung

Die Erfindung betrifft eine Verbrennungskraftmaschine, insbesondere für einen Kraftwagen, der im Oberbegriff des Patentanspruchs 1 angegebenen Art.

Die DE 10 2006 054 463 A1 offenbart ein Verfahren zum Betrieb einer bivalenten, fremdgezündeten Brennkraftmaschine, die mit flüssigem und gasförmigem Kraftstoff betreibbar ist, wofür mindestens eine Einspritzdüse für Otto-Kraftstoff und mindestens ein Gasinjektor je Zylinder vorgesehen sind. Dabei ist vorgesehen, dass in einem ausgewählten Betriebsbereich der Brennkraftmaschine gleichzeitig sowohl flüssiger als auch gasförmiger Kraftstoff eingespritzt wird und ansonsten der Betrieb der Brennkraftmaschine mit flüssigem oder gasförmigem Kraftstoff durchgeführt wird.

US 4,742,801 A offenbart eine Verbrennungskraftmaschine mit einer Kraftstoffversorgung für flüssigen Kraftstoff und mit einer Kraftstoffversorgung für gasförmigen Kraftstoff.

Es ist Aufgabe der vorliegenden Erfindung, eine Verbrennungskraftmaschine der eingangs genannten Art bereitzustellen, welche einen besonders effizienten Betrieb aufweist.

Diese Aufgabe wird durch eine Verbrennungskraftmaschine mit den Merkmalen des Patentanspruchs 1 gelöst. Vorteilhafte Ausgestaltungen mit zweckmäßigen und nichttrivialen Weiterbildungen der Erfindung sind in den übrigen Patentansprüchen angegeben.

Eine erfindungsgemäße Verbrennungskraftmaschine, insbesondere für einen Kraftwagen, mit einer Kraftstoffversorgung für flüssigen Kraftstoff, insbesondere Benzin, und mit einer Kraftstoffversorgung für gasförmigen Kraftstoff, beispielsweise Erdgas, zeichnet sich dadurch aus, dass zwischen den Kraftstoffversorgungen wenigstens ein Wärmetauscher vorgesehen ist, mittels welchem ein Wärmeaustausch zwischen dem gasförmigen und dem flüssigen Kraftstoff ermöglicht ist und mittels des Wärmetauschers zu einer Speichereinrichtung, insbesondere einem Tank, für den flüssigen Kraftstoff rückströmender flüssiger Kraftstoff kühlbar ist und der Wärmetauscher in Strömungsrichtung des der Verbrennungskraftmaschine zuzuführenden gasförmigen Kraftstoffes stromab oder an einer Druckeinstelleinrichtung, insbesondere eines Druckreglers, angeordnet ist, mittels welcher der gasförmige Kraftstoff von einem ersten Druckniveau auf ein zweites, dem gegenüber niedrigeres Druckniveau expandierbar ist. Die erfindungsgemäße Verbrennungskraftmaschine kann beispielsweise in einem Betriebszustand ausschließlich mit dem gasförmigen Kraftstoff und in einem anderen Betriebszustand ausschließlich mit dem flüssigen Kraftstoff betrieben werden. Ebenso möglich ist, dass ein Betriebszustand gegeben ist, in welchem die Verbrennungskraftmaschine sowohl mit dem flüssigen Kraftstoff als auch mit dem gasförmigen Kraftstoff betrieben wird. In diesen Betriebszuständen wird der gasförmige Kraftstoff und/oder der flüssige Kraftstoff in wenigstens einem Brennraum, insbesondere einen Zylinder, der

Verbrennungskraftmaschine eingebracht und verbrannt. Um derartige Betriebszustände der Verbrennungskraftmaschine zu realisieren, umfasst der Kraftwagen jeweilige, der Verbrennungskraftmaschine zugeordnete Speichereinrichtungen, insbesondere Tanks, wobei in einer der Speichereinrichtungen der flüssige Kraftstoff und in der anderen Speichereinrichtung der gasförmige Kraftstoff zum Transport während einer Fahrt des Kraftwagens speicherbar beziehungsweise gespeichert ist.

Der durch den wenigstens einen Wärmetauscher ermöglichte Wärmeaustausch zwischen dem gasförmigen und dem flüssigen Kraftstoff ermöglicht eine Einstellung der jeweiligen Temperaturen der Kraftstoffe. Mit anderen Worten können dadurch gewünschte Temperaturen der Kraftstoffe eingestellt werden, die einen effizienten Betrieb der Verbrennungskraftmaschine ermöglichen, da die Kraftstoffe dann vorteilhafte Eigenschaften aufweisen. Diese Einstellung der gewünschten Temperatur ist dabei ohne zusätzlichen Aufwand, insbesondere ohne zusätzlichen Energie- sowie Bauteileaufwand, möglich, was die Teileanzahl, das Gewicht, den Bauraumbedarf sowie die Kosten der erfindungsgemäßen Verbrennungskraftmaschine gering halten. Dieser Aspekt wirkt sich auch positiv auf einen besonders effizienten Betrieb der Verbrennungskraftmaschine aus, da keine zusätzliche Energie zur Regelung zusätzlicher Bauteile und/oder zur Einstellung der gewünschten und vorteilhaften Temperaturen der Kraftstoffe aufgewendet werden muss.

In einer vorteilhaften Ausführungsform der Erfindung ist der flüssige Kraftstoff mittels des Wärmetauschers infolge des Wärmeaustausches kühlbar. Dies führt dazu, dass ein Ausdampfen flüchtiger Bestandteile des flüssigen Kraftstoffs vermieden oder zumindest reduziert ist. Dampft der flüssige Kraftstoff aus, so erfordert dies zur Einhaltung von Emissionsgrenzwerten ein Auffangen der ausgedampften Bestandteile, was beispielsweise durch wenigstens einen Filter, insbesondere einen Kohlefilter und insbesondere einen Aktivkohlefilter, realisiert werden kann. Ein solcher Filter kann die ausgedampften Bestandteile so lange zurückhalten, bis er einen so genannten Sättigungszustand erreicht, ab welchem er keine Bestandteile mehr auffangen kann. Der Filter ist dann gesättigt. Um weitere oder mehr ausgedampfte Bestandteile auffangen zu können, ist eine so genannte Regenerierung des Filters oder ein größeres Volumen des Filters vonnöten. Durch die Vermeidung oder zumindest die Reduzierung des Ausdampfens des flüssigen Kraftstoffs infolge dessen Kühlung durch den Wärmetauscher kann die Anzahl an notwendigen Regenerierungen sowie das Volumen des Filters beziehungsweise einer entsprechenden Auffangeinrichtung gering gehalten werden. Dies kommt sowohl dem effizienten Betrieb der Verbrennungskraftmaschine als auch deren Bauraumbedarf zugute, was zur Vermeidung oder zur Lösung von Package-Problemen insbesondere in einem platzkritischen Bereich wie einem Motorraum führt.

Gemäß der Erfindung ist der Wärmetauscher in Strömungsrichtung des der Verbrennungskraftmaschine zuzuführenden gasförmigen Kraftstoffes stromab oder an einer Druckeinstelleinrichtung, insbesondere eines Druckreglers, angeordnet, mittels welcher der gasförmige Kraftstoff von einem ersten Druckniveau auf ein zweites, dem gegenüber niedrigeres Druckniveau expandierbar ist. Wird die Verbrennungskraftmaschine beispielsweise mit gasförmigem Kraftstoff in einem Betriebszustand betrieben, so wird der gasförmige Kraftstoff der korrespondierenden Speichereirichtung, beispielsweise einer Gasflasche, entnommen. Der gasförmige Kraftstoff befindet sich in einem hoch verdichteten Zustand in der korrespondierenden Speichereinrichtung, wird aber mit einem dem gegenüber niedrigeren Druck in den Brennraum eingebracht. Mittels der Druckeinstelleinrichtung ist nun der gasförmige Kraftstoff in seinem Druckniveau absenkbar, woraus eine Expansion des gasförmigen Kraftstoffs resultiert. Infolge des so genannten Joule-Thomson-Effekts kühlt sich der gasförmige Kraftstoff dabei stark ab, wobei er beispielsweise eine Temperatur von ca. -70 °C aufweist. Aufgrund dieser sehr geringen Temperatur kann der flüssige Kraftstoff infolge des Wärmeaustausches besonders gut und effizient gekühlt werden, so dass der flüssige Kraftstoff eine besonders geringe Temperatur aufweist.

Um den Bauraumbedarf der Verbrennungskraftmaschine weiterhin gering zu halten, ist es vorteilhaft, wenn der Wärmetauscher zumindest bereichsweise in ein Gehäuse der Druckeinstelleinrichtung integriert ist.

Gemäß der Erfindung ist mittels des Wärmetauschers zu der korrespondierenden Speichereinrichtung, insbesondere dem Tank, für den flüssigen Kraftstoff rückströmender flüssiger Kraftstoff kühlbar. Dadurch ist nicht nur ein beispielsweise durch eine entsprechende Leitung fließender, flüssiger Kraftstoff sondern auch weiterer, sich in der Speichereinrichtung befindender flüssiger Kraftstoff sowie die Speichereinrichtung selbst kühlbar beziehungsweise infolge des Wärmeaustausches auf eine gewünschte Temperatur einstellbar. Somit ist eine besonders große Menge an flüssigem Kraftstoff kühlbar beziehungsweise auf die gewünschte Temperatur einstellbar und die Vorteile dieser Einstellung der Temperatur kommen zumindest nahezu dem gesamten flüssigen Kraftstoff der Verbrennungskraftmaschine zugute. Dadurch ist die insbesondere in der Speichereinrichtung immanente und geschilderte Problematik des Ausdampfens des flüssigen Kraftstoffs vermieden oder zumindest reduziert.

Ist der Wärmetauscher in Strömungsrichtung des zu der Speichereinrichtung, insbesondere dem Tank, für den flüssigen Kraftstoff rückströmenden flüssigen Kraftstoffes stromauf einer Pumpeinrichtung, insbesondere einer Hochdruckpumpe, zum Fördern des flüssigen Kraftstoffes zur Verbrennungskraftmaschine angeordnet, so birgt dies den Vorteil, dass dadurch die Pumpeinrichtung über den flüssigen Kraftstoff auf eine bestimmte, vorteilhafte Temperatur einstellbar ist. Wird der Kraftstoff infolge des Wärmeaustausches gekühlt, so kann der gekühlte Kraftstoff die Pumpeinrichtung durchströmen, wodurch auch die Pumpeinrichtung selbst gekühlt wird.

Wird die beispielsweise als direkteinspritzender Ottomotor ausgebildete Verbrennungskraftmaschine mit dem gasförmigen Kraftstoff betrieben, wobei beispielsweise gasförmiger Kraftstoff und kein oder eine nur geringe Menge an flüssigem Kraftstoff in den Brennraum beziehungsweise Brennräume, insbesondere in den Zylinder , insbesondere Zylinder, eingebracht, insbesondere direkt eingespritzt, wird, so wird kein oder eine nur sehr geringe Menge an flüssigem Kraftstoff durch die Pumpeinrichtung zur Verbrennungskraftmaschine gefördert, wodurch kein oder ein nur sehr geringer Kraftstoffaustausch in der Speichereinrichtung, insbesondere dem Tank, stattfindet was zu einer ungenügenden Kühlung der Pumpeinrichtung führen kann. Um einen Kraftstoffaustausch zu realisieren, kann vorgesehen sein, dass, obwohl kein oder eine nur sehr geringe Menge an Kraftstoff zum Betrieb der Verbrennungskraftmaschine benötigt wird, mittels einer weiteren oder der Pumpeinrichtung aus der Speichereinrichtung flüssiger Kraftstoff gefördert wird, wobei dieser geförderte Kraftstoff zumindest teilweise ungenutzt über wenigstens eine Rücklaufleitung in die Speichereinrichtung wieder zurückfließen kann. Dadurch kann die Pumpeinrichtung gekühlt werden, jedoch führt dies zu einer Erwärmung des flüssigen Kraftstoffs in der Speichereinrichtung, wodurch das geschilderte Ausdampfen der leicht flüchtigen Bestandteile des flüssigen Kraftstoffs auftreten kann, falls keine anderweitigen Vorkehrungen getroffen sind. Daraus kann eine Änderung der Zusammensetzung des Kraftstoffes resultieren, was mit schlechten Kaltstarteigenschaften des Kraftstoffes und damit der Verbrennungskraftmaschine einhergehen kann.

Dadurch, dass der Wärmetauscher in Strömungsrichtung des zu der Speichereinrichtung rückströmenden flüssigen Kraftstoffes stromauf der Pumpeinrichtung angeordnet ist und somit der Kraftstoff stromauf der Pumpeinrichtung infolge des Wärmeaustausches gekühlt werden kann, ist einerseits das Ausdampfen des Kraftstoffs und damit die Änderung dessen Zusammensetzung vermieden oder zumindest reduziert. Andererseits ist dadurch die Pumpeinrichtung sehr effizient und vorteilhaft kühlbar, da sie den gekühlten Kraftstoff aus der Speichereinrichtung fördert, wodurch der gekühlte, flüssige Kraftstoff die Pumpeinrichtung durchströmen kann. Stromab der Pumpeinrichtung kann dann der infolge der Kühlung der Pumpeinrichtung wieder erwärmte flüssige Kraftstoff wiederum infolge des Wärmeaustausches mit dem gasförmigen Kraftstoff mittels des Wärmetauschers gekühlt werden, fließt dann über die Rückführleitung zurück zur Speichereinrichtung, aus welcher er wieder von der Pumpeinrichtung gefördert werden kann, die dann wiederum von dem flüssigen Kraftstoff gekühlt wird. Damit ist ein Kühlkreislauf zur Kühlung der Pumpeinrichtung gebildet, bei gleichzeitiger Vermeidung oder zumindest Reduzierung des Ausdampfens des Kraftstoffes. Dieser vorteilhafte Kühlkreislauf ist dabei ohne zusätzlichen oder nennenswerten Energieaufwand realisiert, was den effizienten Betrieb der Verbrennungskraftmaschine zugute kommt.

Ein weiterer Vorteil ist, dass auch der gasförmige Kraftstoff auf eine gewünschte und vorteilhafte Temperatur infolge des Wärmeaustausches gebracht werden kann. Wird der gasförmige Kraftstoff beispielsweise infolge des Wärmeaustausches erwärmt, so kann dadurch einer Vereisung von gasführenden Komponenten, beispielsweise infolge tiefer Temperaturen des gasförmigen Kraftstoffs durch die Expansion des gasförmigen Kraftstoffs, entgegengewirkt werden.

In einer vorteilhaften Ausführungsform ist der Wärmetauscher mit einer von dem flüssigen Kraftstoff durchströmbaren Leitung, insbesondere einer Rückführleitung zu der Speichereinrichtung für den flüssigen Kraftstoff, und mit einer von dem gasförmigen Kraftstoff durchströmbaren Leitung, insbesondere einer Zuführleitung zu der Verbrennungskraftmaschine, verbunden, insbesondere fluidisch verbunden. Dadurch sind die die jeweiligen Leitungen durchströmende Kraftstoffe besonders gut, effizient und bedarfsgerecht auf eine jeweilige, gewünschte Temperatur einstellbar, so dass sich ein effizienter Betrieb der Verbrennungskraftmaschine realisieren lässt. Dabei ist, wie bereits geschildert, beispielsweise der flüssige Kraftstoff kühlbar und einer Vereisung der gasförmigen Kraftstoff führenden Komponenten entgegenzuwirken. All dies begünstigt den besonders effizienten Betrieb der erfindungsgemäßen Verbrennungskraftmaschine.

Ist eine mit der von dem flüssigen Kraftstoff durchströmbaren Leitung fluidisch verbundene und schaltbare Ventileinrichtung vorgesehen, mittels welcher die von dem flüssigen Kraftstoff durchströmbare Leitung fluidisch freigebbar und zumindest bereichsweise fluidisch versperrbar, insbesondere komplett fluidisch versperrbar, ist, so können Umpumpverluste der beziehungsweise einer Pumpeinrichtung zur Förderung des flüssigen Kraftstoffs gering gehalten werden. Dies reduziert die Verluste der Verbrennungskraftmaschine, was den effizienten Betrieb derselbigen weiterhin begünstigt. Die Ventileinrichtung ermöglicht es dabei vorteilhafterweise, ein Durchströmen der Leitung von dem flüssigen Kraftstoff insbesondere komplett zu vermeiden oder zu ermöglichen. Darüber hinaus kann dadurch ein gewünschtes Temperaturniveau der Pumpeinrichtung eingestellt werden.

Vorteilhafterweise ist die der von dem flüssigen Kraftstoff durchströmbaren Leitung zugeordnete Ventileinrichtung in Abhängigkeit von einem Betriebszustand der Verbrennungskraftmaschine und/oder in Abhängigkeit von einer Temperatur einer beziehungsweise der Pumpeinrichtung zum Fördern des flüssigen Kraftstoffs zur Verbrennungskraftmaschine verstellbar. Die Ventileinrichtung ist beispielsweise als elektromagnetisch schaltbares Ventil ausgebildet, welches in der Rücklaufleitung integriert ist. Die Ventileinrichtung ermöglicht beispielsweise nur dann ein Strömen des flüssigen Kraftstoffes durch die entsprechende Leitung, wenn gasförmiger Kraftstoff zum Betrieb der Verbrennungskraftmaschine erforderlich ist beziehungsweise gewünscht ist und/oder wenn eine Kühlung der Pumpeinrichtung vonnöten ist. Dabei kann anhand einer Temperatur der Pumpeinrichtung entschieden werden, ob eine Kühlung derselbigen vonnöten ist oder nicht. Diese Temperatur wird beispielsweise mittels einer Erfassungseinrichtung, insbesondere eines Sensors, erfasst oder mittels eines Modells modelliert und anhand des Modells, beispielsweise mittels einer Regelungseinrichtung, insbesondere einem Steuergerät, der Verbrennungskraftmaschine, berechnet.

Wird die Verbrennungskraftmaschine mit dem flüssigen Kraftstoff, insbesondere Benzin, betrieben, so kann durch die schaltbare Ventileinrichtung ein Umpumpen des flüssigen Kraftstoffs zur Kühlung desselbigen unterbunden werden, was eine Leistungsaufnahme, insbesondere eine elektrische Leistungsaufnahme, bei einer zum Umpumpen vorgesehenen Pumpeinrichtung gering hält oder gar vermeidet, wodurch der Energiebedarf der Verbrennungskraftmaschine insgesamt und damit ihr Kraftstoffverbrauch gering gehalten werden kann.

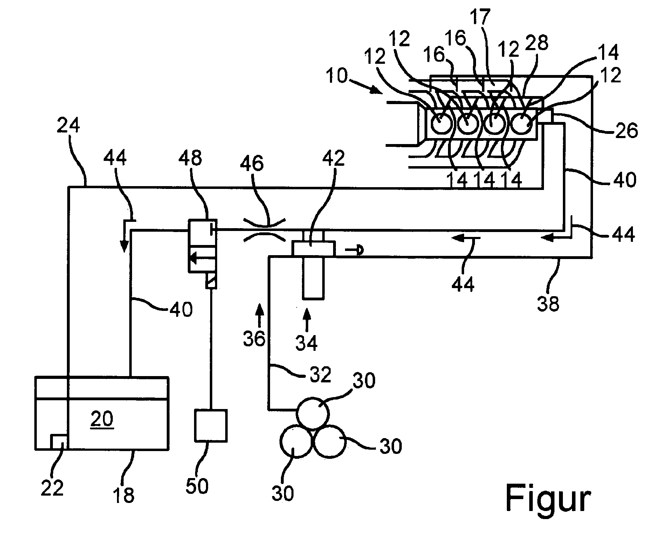

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der Figur eine Prinzipdarstellung einer Verbrennungskraftmaschine, welche sowohl mit gasförmigem als auch mit flüssigem Kraftstoff betreibbar ist und welche einen Wärmetauscher umfasst, mittels welchem ein Wärmeaustausch zwischen dem flüssigen und dem gasförmigen Kraftstoff ermöglicht ist.

Die Figur zeigt eine Verbrennungskraftmaschine 10 mit vier Zylindern 12, welche sowohl mit gasförmiger Kraftstoff, insbesondere Erdgas (compressed natural gas, komprimiertes Erdgas), als auch mit flüssigem Kraftstoff in Form von Benzin betreibbar ist. Dazu umfasst die Verbrennungskraftmaschine 10 jeweilige, den Zylindern 12 zugeordnete Injektoren 14, mittels welcher Benzin direkt in die Zylinder 12 einspritzbar ist. Ferner umfasst sie Injektoren bzw. Einblasventile16, mittels welchen Erdgas in einen Luftverteiler 17 der Verbrennungskraftmaschine 10 einbringbar ist. Es ist auch denkbar, dass der gasförmige Kraftstoff über die jeweiligen Injektoren 16 direkt in die Zylinder einbringbar ist.

Die Verbrennungskraftmaschine 10 kann einen Betriebszustand aufweisen, in welchem sie ausschließlich mit Benzin betrieben wird. Ebenso kann sie in einem Betriebszustand betrieben werden, in welchem sie ausschließlich mit Erdgas betrieben wird.

Wird Benzin zum Betrieb der Verbrennungskraftmaschine 10 benötigt, so wird das Benzin aus einem Tank 18, in welchem Benzin 20 aufgenommen und speicherbar ist, mittels einer Vorförderpumpe 22 über eine Vorlaufleitung 24 zu einer Hochdruckpumpe 26 gefördert. Die Hochdruckpumpe 26 setzt das Benzin unter sehr hohen Druck und fördert es zu einer Kraftstoffverteileinrichtung 28, welche auch als Rail bezeichnet wird, von welcher es den Injektoren 14 zugeteilt und schließlich in die Zylinder 12 eingespritzt wird. Infolge des durch die Hochdruckpumpe 26 bereitgestellten hohen Drucks des Benzins kann dieses besonders fein zerstäubt in die Zylinder 12 eingespritzt werden, was einem sehr effizienten Betrieb der Verbrennungskraftmaschine 10 zuträglich ist.

Zur Speicherung und Fortbewegung des Erdgases sind Gasflaschen 30 vorgesehen, in welchen das Erdgas mit einem Druck von bis zu 200 Bar komprimiert aufgenommen ist. Ist Erdgas zum Betrieb der Verbrennungskraftmaschine 10 erforderlich beziehungsweise erwünscht, so wird das Gas über eine Gasverrohrung 32 zu einem Druckregler 34 geführt, mittels welchem ein Druck in Strömungsrichtung des Erdgases gemäß Richtungspfeilen 36 stromab des Druckreglers 34 eingestellt wird. Über eine weitere Gasverrohrung 38 wird dann das Erdgas zu den Injektoren 16 geführt und in den Luftverteiler 17 eingeblasen.

Wird die Verbrennungskraftmaschine 10 beispielsweise ausschließlich mit Erdgas betrieben, so ist zur Kühlung der Hochdruckpumpe 26 vorgesehen, dass die Vorförderpumpe 22 Benzin zur Hochdruckpumpe 26 fördert, wobei das Benzin dann die Hochdruckpumpe 26 durchströmt und über eine Rücklaufleitung 40 in den Tank 18 zurückströmt. Das Benzin wird dabei infolge der Kühlung der Hochdruckpumpe 26 erwärmt, was auch zu einer Erwärmung des Benzins 20 in dem Tank 18 führt. Um das so erwärmte Benzin sowie den Tank 18 zu kühlen, ein Ausdampfen flüchtiger Bestandteile des Benzins 20 zu vermeiden und die Hochdruckpumpe 26 besonders effizient kühlen zu können, ist in den Druckregler 34 ein Wärmetauscher 42 integriert, mittels welchem ein Wärmeaustausch zwischen dem die Gasverrohrungen 32 und 38 durchströmenden Erdgas und dem die Rücklaufleitung 40 durchströmenden Benzin ermöglicht ist.

Infolge der Druckabsenkung und der Expansion des Erdgases mittels des Druckreglers 34 kühlt sich das Erdgas aufgrund des so genannten Joule-Thomson-Effekts auf ca. -70 °C ab, so dass das Benzin besonders effizient mittels des Erdgases gekühlt werden kann. In Strömungsrichtung des Benzins gemäß Richtungspfeilen 44 durch die Rücklaufleitung 40 ist stromab des Wärmetauschers 42 eine Drossel 46 vorgesehen, mittels welcher eine Durchflussbegrenzung und eine Druckhaltung im Bezinkreislauf realisiert sind. Weiter stromab des Druckreglers 34 ist ein elektromagnetisch schaltbares Ventil 48 zumindest bereichsweise in die Rücklaufleitung 40 integriert, mittels welcher die Rücklaufleitung 40 in einer ersten Stellung fluidisch freigebbar ist, so dass das Benzin die Rücklaufleitung 40 durchströmen kann.

In einer zweiten Stellung des Ventils 48 ist die Rücklaufleitung 40 fluidisch versperrbar, so dass kein Benzin die Rückführleitung 40 durchströmen kann und ein Umpumpen des Benzins durch die Vorförderpumpe 22 über die Hochdruckpumpe 26 und zurück in den Tank 18 unterbunden ist. Dies hält die Leistungsaufnahme der Vorförderpumpe 22 insbesondere in dem Betriebszustand, in welchem Benzin zum Betrieb der Verbrennungskraftmaschine 10 erforderlich beziehungsweise gewünscht ist, gering da sie ggf. abgeschaltet werden kann. Dadurch weist die Verbrennungskraftmaschine 10 einen besonders effizienten Betrieb auf.

Das schaltbare Ventil 48 wird durch ein Steuergerät 50 der Verbrennungskraftmaschine 10 in Abhängigkeit von Betriebszuständen der Verbrennungskraftmaschine 10 sowie in Abhängigkeit von der Temperatur der Hochdruckpumpe 26 geschaltet, wobei beispielsweise dann eine Kühlung der Hochdruckpumpe 26 vonnöten ist, wenn ihre Temperatur einen vorgegebenen Schwellwert überschreitet. Ein Umpumpen des Benzins 20 mittels der Vorförderpumpe 22 aus dem Tank 18 hinaus, über die Hochdruckpumpe 26 hinweg und über die Rückführleitung 40 zurück in den Tank 18 ist in dem Betriebszustand, in welchem Benzin zum Betrieb der Verbrennungskraftmaschine 10 benötigt wird, nicht erforderlich, da die Hochdruckpumpe 26 dann von dem in den Zylinder 12 einzuspritzendem Kraftstoff gekühlt wird.

Die Kühlung des Benzins 20 in dem Tank 18 reduziert oder vermeidet gar ein Ausdampfen flüchtiger Bestandteile des Benzins 20, so dass eine Auffangeinrichtung, insbesondere ein Aktivkohlefilter, zum Auffangen der flüchtigen Bestandteile zum Einhalten von Emissionsgrenzwerten in deren Volumen gering gehalten werden kann. Auch ist ein sehr häufiges Regenerieren dieser Auffangeinrichtung nicht vonnöten ist.

## Patentansprüche

1. Verbrennungskraftmaschine (10), insbesondere für einen Kraftwagen, mit einer Kraftstoffversorgung für flüssigen Kraftstoff, insbesondere Benzin, und mit einer Kraftstoffversorgung für gasförmigen Kraftstoff,
**dadurch gekennzeichnet, dass**
zwischen den Kraftstoffversorgungen wenigstens ein Wärmetauscher (42) vorgesehen ist, mittels welchem ein Wärmeaustausch zwischen dem gasförmigen und dem flüssigen Kraftstoff ermöglicht ist und mittels des Wärmetauschers (42) zu einer Speichereinrichtung (18), insbesondere einem Tank (18), für den flüssigen Kraftstoff (20) rückströmender flüssiger Kraftstoff kühlbar ist und der Wärmetauscher (42) in Strömungsrichtung (36) des der Verbrennungskraftmaschine (10) zuzuführenden gasförmigen Kraftstoffes stromab oder an einer Druckeinstelleinrichtung (34), insbesondere eines Druckreglers (34), angeordnet ist, mittels welcher der gasförmige Kraftstoff von einem ersten Druckniveau auf ein zweites, dem gegenüber niedrigeres Druckniveau expandierbar ist.

2. Verbrennungskraftmaschine (10) nach Anspruch 1,
**dadurch gekennzeichnet, dass**
der flüssige Kraftstoff mittels des Wärmetauschers (42) infolge des Wärmeaustausches kühlbar ist.

3. Verbrennungskraftmaschine (10) nach Anspruch 1 oder 2,
**dadurch gekennzeichnet, dass**
der Wärmetauscher (42) zumindest bereichsweise in ein Gehäuse der Druckeinstelleinrichtung (34) integriert ist.

4. Verbrennungskraftmaschine (10) nach einem der vorhergehenden Ansprüche,
**dadurch gekennzeichnet, dass**
der Wärmetauscher (42) in Strömungsrichtung (44) des zu einer Speichereinrichtung (18), insbesondere einem Tank (18), für den flüssigen Kraftstoff (20) rückströmenden flüssigen Kraftstoffes stromauf einer Pumpeinrichtung (22, 26), insbesondere eine Hochdruckpumpe (26), zum Fördern des flüssigen Kraftstoffes zur Verbrennungskraftmaschine (10) angeordnet ist.

5. Verbrennungskraftmaschine (10) nach einem der vorhergehenden Ansprüche,
**dadurch gekennzeichnet, dass**
der Wärmetauscher (42) mit einer von dem flüssigen Kraftstoff durchströmbaren Leitung (40), insbesondere einer Rückführleitung (40) zu einer Speichereinrichtung (18) für den flüssigen Kraftstoff (20), und mit einer von dem gasförmigen Kraftstoff durchströmbaren Leitung (32, 38), insbesondere einer Zuführleitung (32, 38) zu der Verbrennungskraftmaschine (10), verbunden, insbesondere fluidisch verbunden, ist.

6. Verbrennungskraftmaschine (10) nach Anspruch 5,
**dadurch gekennzeichnet, dass**
eine mit der von dem flüssigen Kraftstoff durchströmbaren Leitung (40) fluidisch verbundene und schaltbare Ventileinrichtung (48) vorgesehen ist, mittels welcher die von dem flüssigen Kraftstoff durchströmbare Leitung (40) fluidisch freigebbar und zumindest bereichsweise fluidisch versperrbar ist.

7. Verbrennungskraftmaschine (10) nach Anspruch 6,
**dadurch gekennzeichnet, dass**
die Ventileinrichtung (48) in Abhängigkeit von einem Betriebszustand der Verbrennungskraftmaschine (10) und/oder in Abhängigkeit von einer Temperatur einer Pumpeinrichtung (22, 26) zum Fördern des flüssigen Kraftstoffs zur Verbrennungskraftmaschine (10) verstellbar ist.

8. Verbrennungskraftmaschine (10) nach einem der vorhergehenden Ansprüche,
**dadurch gekennzeichnet, dass**
die Verbrennungskraftmaschine (10) als direkteinspritzende Verbrennungskraftmaschine (10) ausgebildet ist, bei welcher der flüssige Kraftstoff direkt in wenigstens einen Brennraum (12), insbesondere einen Zylinder (12), der Verbrennungskraftmaschine (10) einspritzbar ist.

9. Verbrennungskraftmaschine (10) nach einem der vorhergehenden Ansprüche,
**dadurch gekennzeichnet, dass**
der gasförmige Kraftstoff in einen Luftverteiler (17) der Verbrennungskraftmaschine (10) einbringbar ist.

## Claims

1. Internal combustion engine (10), in particular for a motor car, having a fuel supply for liquid fuel, in particular petrol, and having a fuel supply for gaseous fuel,
**characterised in that**
at least one heat exchanger (42) is provided between the fuel supplies, by means of which a heat exchange between the gaseous fuel and the liquid fuel is made possible and, by means of the heat exchanger (42), liquid fuel flowing back to a storage means (18), in particular a tank (18), for the liquid fuel (20) can be cooled, and the heat exchanger (42) is arranged in the flow direction (36) of the gaseous fuel to be fed to the internal combustion engine (10) downstream or at a pressure adjusting device, in particular a pressure regulator (34), by means of which the gaseous fuel can expand from a first pressure level to a second pressure level that is lower than the first level.

2. Internal combustion engine (10) according to claim 1,
**characterised in that**
the liquid fuel can be cooled by means of the heat exchanger (42) as a result of the heat exchange.

3. Internal combustion engine (10) according to claim 1 or 2,
**characterised in that**
the heat exchanger (42) is integrated at least in areas into a housing of the pressure adjusting device (34).

4. Internal combustion engine (10) according to one of the preceding claims,
**characterised in that**
the heat exchanger (42) is arranged in the flow direction (44) of the liquid fuel flowing back to a storage means (18), in particular a tank (18), for the liquid fuel upstream of a pumping device (22, 26), in particular a high pressure pump (26), to deliver the liquid fuel to the internal combustion engine (10).

5. Internal combustion engine (10) according to one of the preceding claims,
**characterised in that**
the heat exchanger (42) is connected to a line (40), through which the liquid fuel can flow, in particular a return line (40) to a storage means (18) for the liquid fuel (20), and to a line (32, 38), through which the gaseous fuel can flow, in particular a feed line (32, 38) to the internal combustion engine (10), in particular being fluidically connected.

6. Internal combustion engine (10) according to claim 5,
**characterised in that**
a valve device (48) which can be fluidically connected and switched with the line (40), through which the liquid fuel can flow, is provided, by means of which valve device (48) the line (40), through which the liquid fuel can flow, can be fluidically released and at least in areas fluidically shut off.

7. Internal combustion engine (10) according to claim 6,
**characterised in that**
the valve device (48) can be adjusted in dependence upon an operating state of the internal combustion engine (10) and / or in dependence upon a temperature of a pumping device (22, 26) to deliver the liquid fuel to the internal combustion engine (10).

8. Internal combustion engine (10) according to one of the preceding claims,
**characterised in that**
the internal combustion engine (10) is designed as a direct injection internal combustion engine (10), wherein the liquid fuel can be injected directly into at least one combustion chamber (12), in particular a cylinder (12), of the internal combustion engine (10).

9. Internal combustion engine (10) according to one of the preceding claims,
**characterised in that**
the gaseous fuel can be conveyed into an air distributor (17) of the internal combustion engine (10).

## Revendications

1. Moteur (10) à combustion interne, en particulier pour un véhicule automobile, doté d'une alimentation en carburant destiné à un carburant liquide, en particulier de l'essence, et doté d'une alimentation en carburant destinée à un carburant gazeux, **caractérisé en ce qu'**entre les alimentations en carburant est disposé au moins un échangeur thermique (42) qui permet un échange thermique entre le carburant gazeux et le carburant liquide et l'échangeur thermique (42) vers un dispositif de stockage, en particulier un réservoir (18) destiné au carburant liquide, peut refroidir le carburant liquide (20) de retour et l'échangeur thermique (42) est disposé dans la direction d'écoulement (36) du carburant gazeux à apporter au moteur (10) à combustion interne en aval ou sur un dispositif de régulation de pression (34), en particulier un manostat (34), qui permet de dilater le carburant gazeux à partir d'un premier niveau de pression à un second niveau de pression inférieur au premier.

2. Moteur (10) à combustion interne selon la revendication 1, **caractérisé en ce que** le carburant liquide peut être refroidi au moyen de l'échangeur thermique (42) à la suite de l'échange thermique.

3. Moteur (10) à combustion interne selon la revendication 1 ou 2, **caractérisé en ce que** l'échangeur thermique (42) est intégré au moins dans certains endroits dans un boîtier du dispositif de régulation de pression (34).

4. Moteur (10) à combustion interne selon l'une quelconque des revendications précédentes, **caractérisé en ce que** l'échangeur thermique (42) est disposé dans la direction d'écoulement (44) du carburant liquide de retour vers le dispositif de stockage (18), en particulier un réservoir (18) destiné au carburant liquide (20) en amont d'un dispositif de pompe (22, 26), en particulier une pompe haute pression (26), pour acheminer le carburant liquide vers le moteur (10) à combustion interne.

5. Moteur (10) à combustion interne selon l'une quelconque des revendications précédentes, **caractérisé en ce que** l'échangeur thermique (42) est en communication, en particulier en communication fluidique avec une conduite (40) pouvant être parcourue par le carburant liquide, en particulier une conduite de retour (40) vers un dispositif de stockage (18) destiné au carburant liquide, et à une conduite (32, 38) pouvant être parcourue par le carburant gazeux, en particulier une conduite d'amenée (32, 38) vers le moteur (10) à combustion interne.

6. Moteur (10) à combustion interne selon la revendication 5, **caractérisé en ce qu'**un dispositif de soupape (48) commutable et raccordé de manière fluidique avec la conduite (40) pouvant être parcourue par le carburant liquide, ledit dispositif de soupape pouvant être libéré de manière fluidique ou bloqué de manière fluidique au moins à certains endroits.

7. Moteur (10) à combustion interne selon la revendication 6, **caractérisé en ce que** le dispositif de soupape (48) en fonction d'un état de fonctionnement du moteur (10) à combustion interne et/ou en fonction d'une température d'un dispositif de pompe (22, 26) peut être réglé pour acheminer le carburant liquide vers le moteur (10) à combustion interne.

8. Moteur (10) à combustion interne selon l'une quelconque des revendications **caractérisé en ce que** le moteur (10) à combustion interne est conçue comme un moteur (10) à combustion interne à injection directe, le carburant liquide pouvant être injecté directement au moins dans une chambre à combustion (12), en particulier dans un cylindre (12), du moteur (10) à combustion interne.

9. Moteur (10) à combustion interne selon l'une quelconque des revendications précédentes, **caractérisé en ce que** le carburant gazeux peut être introduit dans un diffuseur d'air (17) du moteur (10) à combustion interne.
